# EUROPÄISCHE PATENTANMELDUNG

(11) **EP 4 202 760 A1**
(43) Veröffentlichungstag der Anmeldung: **28.06.2023**
(21) Anmeldenummer: 21216228.3
(22) Anmeldetag: 21.12.2021
(51) Int. Cl.: G06K 9/62, G06T 17/05, G01M 17/007, G06F 30/00, G06V 20/50, G06V 20/56, G09B 9/02

(54) **COMPUTERIMPLEMENTIERTES VERFAHREN ZUM ERSTELLEN EINER DREIDIMENSIONALEN SIMULATIONSUMGEBUNG**

(71) Anmelder: dSPACE GmbH, 33102 Paderborn (DE)
(72) Erfinder: Atorf, Philipp, 33102 Paderborn (DE); Wittenborn, Kira, 33100 Paderborn (DE)

(57) **Zusammenfassung**

Die Erfindung betrifft ein computerimplementiertes Verfahren zum Erstellen einer dreidimensionalen Simulationsumgebung, mit folgenden Verfahrensschritten:
Bereitstellen einer Grundbibliothek mit dreidimensionalen virtuellen Objekten,
Erfassen der Eingabe einer geografischen Region,
Einholen von charakteristischen Informationen, die Merkmale verschiedener Bereiche der geografischen Region charakterisieren,
Herleiten von zusätzlichen Informationen für die verschiedenen Bereiche der geografischen Region auf der Grundlage der charakteristischen Informationen, wobei als zusätzliche Informationen Landnutzungsinformationen hergeleitet werden, falls die charakteristischen Informationen keine Landnutzungsinformationen umfassen,
Ermitteln der Objekte aus der Grundbibliothek, die in der geografischen Region vorkommen, auf der Grundlage der charakteristischen Informationen und/oder der zusätzlichen Informationen, und Ablegen dieser Objekte in einer Regionalbibliothek,
Unterteilen der geografischen Region in Sektoren gleicher Landnutzung auf der Grundlage der Landnutzungsinformationen,
für jeden Sektor Ermitteln der Objekte aus der Regionalbibliothek, die zu der Landnutzung dieses Sektors passen, und
Auffüllen jedes Sektors mit einer Auswahl an Objekten, die für den jeweiligen Sektor aufgrund dessen Landnutzung ermittelt worden sind.

Damit eine Möglichkeit bereitgestellt, eine realistische virtuelle dreidimensionale Umgebung auf einfache und verlässliche Weise zu erstellen.

## Beschreibung

Die Erfindung betrifft ein computerimplementiertes Verfahren zum Erstellen einer dreidimensionalen (3D) Simulationsumgebung.

Die Erfindung ist relevant für das technische Gebiet des Entwickelns und Testens von Fahrassistenzsystem für das autonome Fahren oder das teilautonome Fahren eines Kraftfahrzeugs. Ein Kraftfahrzeug, das zum autonomen oder teilautonomen Fahren geeignet ist, weist im Allgemeinen ein Sensorsystem zum Erfassen von Objekten in der Umgebung des Fahrzeugs auf und wird wenigstens teilweise anhand von Steuersignalen des Sensorsystems gesteuert. Entsprechende Sensoren eines solchen Sensorsystems des Kraftfahrzeugs sind im Allgemeinen Ultraschallsensoren, LIDAR-Sensoren, RADAR-Sensoren und/oder Kameras, mit denen die Umgebung des Kraftfahrzeugs erfasst wird, um damit ein autonomes oder zumindest teilautonomes Fahren des Testfahrzeugs zu erzielen. Entsprechende Sensorsysteme sind außerdem Systeme zum Empfang von Daten von anderen Fahrzeugen oder stationären Vorrichtungen des Straßenverkehrs, um durch Auswertung der Daten ein autonomes oder zumindest teilautonomes Fahren des Fahrzeugs zu erzielen (Car2X-Kommunikation).

Bei einem autonomen Fahren muss der Fahrer, zumindest über lange Strecken, gar nicht mehr in den Fahrprozess eingreifen. Beim teilautonomen Verfahren ist es zumindest so, dass das Fahrzeug automatisch, also ohne Eingriff des Fahrers, auf bestimmte Verkehrssituationen reagiert und damit z.B. eine Kollision mit einem vorausfahrenden langsameren Fahrzeug vermeidet, indem bei Annäherung an dieses vorausfahrende Fahrzeug automatisch ein Bremsvorgang eingeleitet wird. Um derartige automatisierte Fahrmanöver durchführen zu können, wird mit Hilfe der Sensoren des Sensorsystems erfasst, wo sich in der Umgebung des Fahrzeugs andere Fahrzeuge, Fußgänger oder andere Hindernisse befinden.

Bevor ein Fahrzeug, das mit einem entsprechenden Sensorsystem ausgerüstet ist, in der Praxis, also auf dem realen Straßennetz, zum teilautonomen oder autonomen Fahren betrieben werden kann, müssen eine Vielzahl von Tests durchgeführt werden, um sicherzustellen, dass das teilautonome bzw. autonome Fahren tatsächlich verlässlich und sicher ist. Zwar erfolgen derartige Tests, typischerweise in einem fortgeschrittenen Stadium, auch auf öffentlichen Straßen mit realen Fahrzeugen. Vorab werden in der Regel jedoch Tests in Form von Simulationen durchgeführt, und zwar mit einem virtuellen Fahrzeug, das sich in einer virtuellen dreidimensionalen Simulationsumgebung bewegt. Um die Reaktion des Sensorsystems für eine hohe Anzahl unterschiedlicher, auch unvorhergesehener, Situationen zu überprüfen, ist es im Stand der Technik bekannt, derartige Tests randomisiert und möglichst realitätsnah durchzuführen. Dazu gehört es auch, das Kraftfahrzeug mit seinem Sensorsystem in ganz unterschiedlichen Umgebungen zu testen. Während bei realen Tests reale Fahrzeuge z.B. in sehr heißen Wüstengebieten oder in sehr kalten Gebieten mit Schnee und Dauerfrost getestet werden, soll bei den Tests in Form von Simulationen zumindest die Umgebung der jeweiligen Region der Erde entsprechen, in der der Test durchgeführt wird.

Dies wird bei herkömmlichen Simulationen dadurch gelöst, dass entsprechende virtuelle Umgebungen "von Hand" programmiert werden. Das ist allerdings sehr aufwändig, schließlich geht es um die Erzeugung realitätsgetreuer 3D-Landschaften und 3D-Szenen mit unzureichender Datengrundlage. In der Regel fehlen nämlich notwendige Daten oder solche Daten können zumindest nicht automatisiert beschaffen werden. Das Erstellen komplexer 3D-Szenen erfordert daher viel manuelle Arbeit. Dazu gehört auch die Recherche, wie es typischerweise in einer Region aussieht. Dies wird bisher durch menschliche Kreativität bei der manuellen Erzeugung von 3D-Szenen gelöst.

Davon ausgehend ist es die Aufgabe der Erfindung, eine realistische virtuelle dreidimensionale Umgebung auf einfache und verlässliche Weise zu erstellen.

Diese Aufgabe wird durch die Gegenstände der unabhängigen Patentansprüche 1 gelöst. Bevorzugte Weiterbildungen finden sich in den Unteransprüchen.

Erfindungsgemäß ist somit ein computerimplementiertes Verfahren zum Erstellen einer dreidimensionalen Simulationsumgebung vorgesehen, mit folgenden Verfahrensschritten:
Bereitstellen einer Grundbibliothek mit dreidimensionalen virtuellen Objekten,
Erfassen der Eingabe einer geografischen Region, für die die dreidimensionale Simulationsumgebung erstellt werden soll,
Einholen von charakteristischen Informationen, die Merkmale verschiedener Bereiche der geografischen Region oder der gesamten geografischen Region charakterisieren,
Herleiten von zusätzlichen Informationen für die verschiedenen Bereiche der geografischen Region oder für die gesamte geografische Region auf der Grundlage der charakteristischen Informationen, wobei als zusätzliche Informationen jedenfalls auch Landnutzungsinformationen hergeleitet werden, falls die charakteristischen Informationen keine Landnutzungsinformationen umfassen,
Ermitteln der dreidimensionalen virtuellen Objekte aus der Grundbibliothek, die in der geografischen Region vorkommen, auf der Grundlage der charakteristischen Informationen und/oder der zusätzlichen Informationen, und Ablegen dieser dreidimensionalen virtuellen Objekte in einer Regionalbibliothek,
Unterteilen der geografischen Region in Sektoren gleicher Landnutzung auf der Grundlage der Landnutzungsinformationen,
für jeden Sektor Ermitteln der dreidimensionalen virtuellen Objekte aus der Regionalbibliothek, die zu der Landnutzung dieses Sektors passen, und
Auffüllen jedes Sektors mit einer Auswahl an dreidimensionalen virtuellen Objekten, die für den jeweiligen Sektor aufgrund dessen Landnutzung ermittelt worden sind.

Der Begriff "zusätzliche Informationen" steht dabei für Informationen, die den charakteristischen Informationen nicht direkt entnehmbar sind, die aber von diesen ableitbar sind. So kann man z.B. mittels der Klimazone der Region auf die dortige Fauna geschlossen werden, so dass von ihrem Aussehen her passende dreidimensionale virtuelle Objekte ausgewählt werden können, die Pflanzen darstellen. Die charakteristischen Informationen umfassen vorzugsweise Katasterinformationen. Katasterinformationen sind Informationen, die aus einem Kataster stammen. Unter dem Begriff "Kataster" wird vorliegend ein Register, eine Liste oder eine Sammlung von Informationen mit Raumbezug verstanden. Im engeren Sinne steht ein Kataster, insbesondere ein Liegenschaftskataster, für ein vorzugsweise gebietsweit flächendeckendes Register sämtlicher Flurstücke und deren Beschreibung. Vorzugsweise werden in einem beschreibenden Teil des Katasters und in Karten des Katasters die Flurstücke mit ihrer räumlichen Lage, Art der Nutzung und Geometrie sowie zusätzlich auch die auf den Flurstücken befindlichen Gebäude beschrieben.

Die Erfindung ist ein Verfahren zur automatischen Erstellung einer realistischen virtuellen 3D- Umgebung. Sie sieht vor, dass eine geographische Region, die virtuell nachgebildet werden soll, und eine Jahreszeit angegeben werden. Dazu kann beispielsweise so vorgegangen werden, dass zunächst öffentlich zugängliche Katasterinformationen der geographischen Umgebung beschafft werden, um daraus Landnutzungsdaten zu erhalten. Sofern diese Landnutzungsdaten nicht in den Katasterinformationen unmittelbar enthalten sind, wird versucht, sie logisch aus den vorhandenen Daten herzuleiten. Beispielsweise ist eine Region mit sehr hoher Bevölkerungsdichte wahrscheinlich ein mit Hochhäusern bebautes Wohngebiet, und eine dicht bebaute, aber gering bevölkerte Fläche wahrscheinlich ein Industriegebiet. Eine Weiterbildung der Erfindung umfasst eine Mustererkennung, um aus der Luftansicht des Straßennetzes und der Bebauung eine Landnutzung herzuleiten. Anhand der am Ende verfügbaren Daten kann die geographische Umgebung z.B. in Landnutzungsplanfelder eingeteilt werden und jedes Planfeld kann zufällig mit 3D-Objekten aufgefüllt werden, die zur geographischen Region, zur Jahreszeit und zur Landnutzung passen. Ganz wesentlich ist dabei, dass in Bereichen, in denen keine oder unzureichende Daten vorhanden sind, durch das Hinzuziehen abgeleiteter Daten die Erstellung einer realitätsnahen Simulationsumgebung verbessert oder überhaupt ermöglicht wird.

Gemäß einer bevorzugten Weiterbildung der Erfindung umfassen die charakteristischen Informationen wenigstens Landnutzungsinformationen und/oder Klimainformationen und/oder Informationen zur Anzahl der Bevölkerung. Dabei ist es weiterhin bevorzugt, dass die Landnutzungsinformationen Informationen dazu umfassen, ob ein Bereich der Region einem Wohngebiet, einem Industriegebiet, einem Agrargebiet oder einem Naturgebiet entspricht. Dabei ist es z.B. auch möglich, die Information "Naturgebiet" weiter zu unterteilen in "Wald", "Gebirge", "Steppe", "Wüste" usw., und diese Informationen können weiter konkretisiert werden, wie als "Mischwald", "Nadelwald", "Laubwald" usw. Ein wesentlicher Aspekt der Erfindung ist dabei auch, dass die dreidimensionale Simulationsumgebung in Abhängigkeit von den verschiedenen Jahreszeiten realitätsnah dargestellt wird. Dazu ist gemäß einer bevorzugten Weiterbildung der Erfindung vorgesehen, dass wenigstens ein Teil der dreidimensionalen virtuellen Objekte der Grundbibliothek hinsichtlich ihres Aussehens zu verschiedenen Jahreszeiten parametrierbar sind, wobei das Verfahren folgende zusätzliche Verfahrensschritte aufweist:
Erfassen der Eingabe einer Jahreszeit, für die die dreidimensionale Simulationsumgebung erstellt werden soll, und
Parametrieren der dreidimensionalen virtuellen Objekte, mit denen ein jeder Sektor aufgefüllt worden ist, hinsichtlich ihres Aussehens in Abhängigkeit von der eingegebenen Jahreszeit.

Durch die Parametrisierbarkeit der Objekte können diese also hinsichtlich ihres Aussehens so angepasst werden, dass sie der jeweiligen Jahreszeit entsprechen.

Alternativ dazu ist gemäß einer bevorzugten Weiterbildung der Erfindung vorgesehen, dass wenigstens ein Teil der dreidimensionalen virtuellen Objekte der Grundbibliothek in verschiedenen Versionen hinterlegt sind, wobei sich diese verschiedenen Versionen hinsichtlich ihres Aussehens zu verschiedenen Jahreszeiten unterscheiden, wobei das Verfahren den folgende zusätzliche Verfahrensschritt aufweist:
Erfassen der Eingabe einer Jahreszeit, für die die dreidimensionale Simulationsumgebung erstellt werden soll, und in dem Schritt des Ermittelns der dreidimensionalen virtuellen Objekte für jeden Sektor aus der Regionalbibliothek, die der Landnutzung dieses Sektors zugeordnet sind, hinsichtlich der Objekte, zu denen jeweils verschiedene Versionen hinterlegt sind, jeweils eine solche Version für den jeweiligen Sektor ausgewählt wird, die der erfassten Jahreszeit entspricht.

Anstatt einer Parametrisierbarkeit der Objekte sind gemäß dieser Alternative also verschiedene Versionen der Objekte hinterlegt, die jeweils zu einer vor bestimmten Jahreszeit passen.

Hinsichtlich der charakteristischen Informationen gilt vorzugsweise, dass die charakteristischen Informationen Informationen zur Bevölkerungsdichte umfassen oder die Informationen zur Bevölkerungsdichte aus den charakteristischen Informationen hergeleitet werden und im Schritt des Herleitens von zusätzlichen Informationen von den Informationen zur Bevölkerungsdichte auf wenigstens einen Teil der Landnutzungsinformationen geschlossen wird. Ein bevorzugtes Ausführungsbeieispiel ist hier z.B. die Berechnung der Bevölkerungsdichte aus Fläche und Einwohneranzahl, um damit auf die Art der Bebauung zu schließen, also darauf, ob die Bebauung aus Hochhäusern, Häusern, einerWohnsiedlung usw. besteht.

Gemäß einer bevorzugten Weiterbildung der Findung ist ferner vorgesehen, dass die charakteristischen Informationen eine Karte umfassen, die Straßen und Gebäudeumrisse angibt, und im Schritt des Herleitens von zusätzlichen Informationen mittels einer auf die in der Karte enthaltenen Straßen und Gebäudeumrisse angewandten Mustererkennung auf wenigstens einen Teil der Landnutzungsinformationen geschlossen wird.

Besonders hilfreich kann es auch sein, wenn gemäß einer bevorzugten Weiterbildung der Erfindung die charakteristischen Informationen ein Erstellungsdatum einer Einheit umfassen, die sich in der Region befindet und im Schritt des Herleitens von zusätzlichen Informationen aus dem Erstellungsdatum auf wenigstens einen Teil der Landnutzungsinformationen geschlossen wird. Dabei kann eine Einrichtung ein Gebäude, ein Platz, ein Park, eine Anpflanzung usw. sein.

Die Erfindung betrifft ferner ein nichtflüchtiges, computerlesbares Speichermedium mit einer darauf abgespeicherten dreidimensionalen Simulationsumgebung, die mit einem Verfahren nach einem der vorhergehenden Ansprüche erhalten worden ist.

Darüber hinaus betrifft die Erfindung ein Verfahren zum Erzeugen von Testdaten zum Testen eines einen Sensordatenstrom auswertenden Steuersystems, mit folgenden Verfahrensschritten:
Durchfahren wenigstens eines Teils der auf dem zuvor beschriebenen nichtflüchtigen, computerlesbaren Speichermedium abgespeicherten dreidimensionalen Simulationsumgebung mit einem einen virtuellen Sensor tragenden virtuellen Fahrzeug und
Erzeugen synthetischer Sensordaten mit dem Sensor, die solchen Daten entsprechen, die ein realer Sensor beim Durchfahren einer realen Umgebung, die der abgespeicherten dreidimensionalen Simulationsumgebung entspricht, erzeugt hätte. Außerdem betrifft die Erfindung nichtflüchtiges, computerlesbares Speichermedium mit darauf abgespeicherten synthetischen Sensordaten, die mit dem zuvor beschriebenen Verfahren erhalten worden sind.

Schließlich betrifft die Erfindung auch eine Verwendung der auf dem zuvor beschriebenen nichtflüchtigen, computerlesbaren Speichermedium nach Anspruch 11 abgespeicherten synthetischer Sensordaten zum Testen eines einen Sensordatenstrom auswertenden Steuersystems. Dabei ist vorzugsweise vorgesehen, dass das einen Sensordatenstrom auswertende Steuersystem ein Fahrerassistenzsystem für eine Kraftfahrzeug ist.

Nachfolgend wir die Erfindung anhand eines bevorzugten Ausführungsbeispiels unter Bezugnahme auf die Zeichnungen weiter im Detail erläutert.

In den Zeichnungen zeigen
Fig. 1 schematisch ein Verfahren zum Erstellen einer 3D-Simulationsumgebung gemäß einem Ausführungsbeispiel der Erfindung und
Fig. 2 schematisch ein Verfahren zum Erzeugen von Testdaten zum Testen eines einen Sensordatenstrom auswertenden Steuersystems gemäß einem Ausführungsbeispiel der Erfindung.

Wie schon angesprochen, geht es bei der Erfindung um die Erzeugung realitätsgetreuer 3D-Landschaften und 3D-Szenen, im Folgenden stets als dreidimensionalen Simulationsumgebung bezeichnet, mit unzureichender Datengrundlage, da notwendige Daten fehlen oder nicht automatisiert beschafft werden können. Daher soll in Bereichen, in denen keine oder unzureichende Daten vorhanden sind durch das Hinzuziehen anderer Daten und das Ermitteln von Metadaten die Simulation der dreidimensionalen Simulationsumgebung verbessert oder überhaupt erst ermöglicht werden.

Kurz zusammengefasst werden dazu gemäß einem Ausführungsbeispiel der Erfindung zunächst frei zugängliche Datensätze hinzugezogen. Dazu zählen Geodatensätze wie "Landnutzung" (Corine Landcover Dataset 2018), Klimazonendaten und Bevölkerungsdaten, (z.B. aus Wikipedia). Aus diesen Daten können dann andere benötigte Daten hergeleitet werden. Beispielsweise kann Hilfe der Klimazone auf die Fauna geschlossen werden, und somit können passende Bäume für die Landnutzungsklasse "Mischwald" ermittelt werden. Ein anderes Beispiel ist die Berechnung der Bevölkerungsdichte aus Fläche und Einwohneranzahl, um damit die Art der Bebauung (Hochhäuser, Wohnsiedlung usw.) zu bestimmen.

Gemäß einem Ausführungsbeispiel der Erfindung stellt ein Anwender die Parameter "geografische Region" und "Jahreszeit" bereit, d.h. er gibt vor, welche Region der Erde er zu welcher Jahreszeit er als 3D-Modell abgebildet haben möchte. Die Parameter "geografische Region" und "Jahreszeit" werden erfasst, so dass das computerimplementierte Verfahren danach vollautomatisch ablaufen kann, bis die gewünschte dreidimensionale Simulationsumgebung fertig erstellt ist.

Beispielsweise ist aus der Klimazone unmittelbar ableitbar, welche Art von Pflanzen in der 3D-Umgebung vorkommen dürfen. Zunächst wird versucht, möglichst viel explizite Information aus einer Datenbank oder aus mehreren Datenbanken zu extrahieren, die charakteristische Informationen enthalten, die Merkmale verschiedener Bereiche der geografischen Region oder der gesamten geografischen Region charakterisieren.

Als eine solche Datenbank kommt z.B. OpenStreetMap (OSM) in Betracht. OSM ist ein freies Projekt, das frei nutzbare Geodaten sammelt, strukturiert und für die Nutzung durch jedermann in einer Datenbank vorhält (Open Data). Diese Daten stehen unter einer freien Lizenz, der Open Database License. Kern des Projekts ist also eine offen zugängliche Datenbank aller beigetragenen Geoinformationen. Aus diesen Daten können grundsätzlich Landkarten erstellt werden, und die Daten können außerdem für Anwendungen wie die vorliegende genutzt werden.

Eine weitere vorliegend in Betracht kommende Datenbank stellt das deutsche Amtliche Liegenschaftskatasterinformationssystem (ALKIS) dar. Für ALKIS wurden alle Daten des Liegenschaftskatasters zusammengeführt. Es stellt ein bundeseinheitliches Verfahren dar und ist gemeinsam mit dem Amtlichen Topographisch-Kartographischen Informationssystem (ATKIS) und dem Amtlichen Festpunktinformationssystem (AFIS) im AAA-Modell formuliert und wird in der GeoInfoDok beschrieben. ALKIS weist raumbezogenen Kartendaten und nicht raumbezogenen Buchdaten auf. Auf diese Weise steht auch für das vorliegende Verfahren ein einheitlicher Grunddatenbestand zur Verfügung, der länderübergreifend als Mindestinhalt festgelegt worden ist. Datenbanken wie ALKIS sind auch für viele andere Länder außerhalb von Deutschland verfügbar.

Ferner stellt Wikipedia eine weitere Datenbank dar, die vorliegend ebenfalls zur Beschaffung von charakteristischen Informationen, die Merkmale verschiedener Bereiche der geografischen Region oder der gesamten geografischen Region charakterisieren, verwendbar ist. Wikipedia ist z.B. dafür geeignet, Klimadaten und Bevölkerungsdaten bereitzustellen.

Zur Erstellung der Simulationsumgebung erforderliche Informationen, die in solchen Datenbanken nicht vorhanden sind, werden mittels verfügbarer charakteristischer Informationen, die Merkmale verschiedener Bereiche der geografischen Region oder der gesamten geografischen Region charakterisieren, hergeleitet. Solche hergeleiteten Informationen werden vorliegend auch als Metadaten bezeichnet. So kann auf diese Weise für ein bestimmtes Areal z.B. der dort aller Wahrscheinlichkeit vorhandene Gebäudetyp ermittelt werden. Ist ein Areal als landwirtschaftlich genutzte Fläche identifiziert, sind dort keine Hochhäuser und keine Fabrikgebäude zu erwarten, sondern nur, in geringer Bebauungsdichte, Einfamilienhäuser und landwirtschaftliche Gebäude. Nutzbar für die Ermittlung von Metadaten sind auch die folgenden typischen Beziehungen: Eine moderate Bevölkerungsdichte weist auf ein Wohngebiet mit Einfamilienhäusern hin, eine extreme Bevölkerungsdichte weist auf ein Wohngebiet mit Hochhäusern hin, eine dichte Bebauung zusammen mit einer geringen Bevölkerungsdichte weist auf Industriegebiet oder ein gewerbliches Gebiet hin, und eine geringe Bevölkerungsdichte weist auf eine landwirtschaftliche Fläche oder eine Naturfläche hin.

Eine Ausführungsbeispiel der Erfindung sieht die Ermittlung von Landnutzungsdaten anhand einer Mustererkennung vor, um aus der Topologie des Straßennetzes und der Bebauung auf die Nutzung eines Areals zu schließen. Die Topologie des Straßennetzes und und die Topologie der Bebauung stehen in aller Regel öffentlich zur Verfügung, z.B. aus einer der weiter oben genannten Datenbanken, und ist damit exakt abbildbar. Gemäß der hier beschriebenen Ausführungsbeispiele der Erfindung werden für die Erstellung einer realitätsgetreuen Simulationsumgebung erforderliche Informationen implizit abgeleitet. Damit kann auch mit einer Datengrundlagen gearbeitet werden, die nicht alle notwendigen Informationen direkt enthält. Im Ergebnis muss daher keine Datenbank gepflegt werden, die für jeden Ort der Erde notwendige Informationen oder sogar fertige 3D-Objekte beinhaltet.

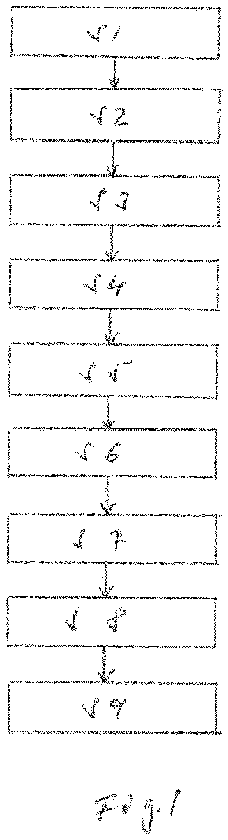

Gemäß einem Ausführungsbeispiel der Erfindung ist der Ablauf des Verfahrens wie folgt und schematisch in Fig. 1 dargestellt:
In einem ersten Verfahrensschritt S1 wird eine Grundbibliothek mit dreidimensionalen virtuellen Objekten bereitgestellt. Dies sind Objekte, die zur Erstellung der dreidimensionalen Simulationsumgebung grundsätzlich verwendbar sind. Solche Objekte können im Prinzip alle Objekte umfassen, die in der Umgebung eines fahrenden Kraftfahrzeugs auftauchen können, wie Straßen, Gebäude, Pflanzen usw. Dabei gilt vorliegend, dass wenigstens ein Teil der dreidimensionalen virtuellen Objekte der Grundbibliothek in verschiedenen Versionen hinterlegt sind, wobei sich diese verschiedenen Versionen hinsichtlich ihres Aussehens zu verschiedenen Jahreszeiten unterscheiden.

In Schritt S2 wird die Eingabe einer geografischen Region erfasst, die von einem Anwender eingegeben worden ist. Diese stellt die geografische Region dar, für die die dreidimensionale Simulationsumgebung erstellt werden soll. Außerdem wird in Schritt S3 die Eingabe einer Jahreszeit erfasst, für die die dreidimensionale Simulationsumgebung erstellt werden soll. Auch die Jahreszeit ist ein Parameter, der von dem Anwender eingegeben worden ist. Die Schritte S2 und S3 können auch zusammengefasst oder gleichzeitig durchgeführt werden.

In Schritt S4 erfolgt ein Einholen von charakteristischen Informationen, die Merkmale verschiedener Bereiche der geografischen Region oder der gesamten geografischen Region charakterisieren. Dabei umfassen die charakteristischen Informationen vorliegend Klimainformationen und Informationen zur Anzahl der Bevölkerung. Diesbezüglich wird auf die Erläuterungen weiter oben Bezug genommen, insbesondere im Hinblick auf die exemplarisch angegebenen Datenbanken, OSM, ALKIS und Wikipedia, die zum Einholen solcher charakteristischer Informationen genutzt werden können. Wie ebenfalls schon oben angesprochen, umfassen diese charakteristischen Informationen in der Regel aber nicht alle Informationen, die zum Erstellen einer realitätstreuen 3D-Simulationsumgebung erforderlich sind.

Daher erfolgt in Schritt S5 ein Herleiten von zusätzlichen Informationen für die verschiedenen Bereiche der geografischen Region oder für die gesamte geografische Region auf der Grundlage der charakteristischen Informationen. Wesentlich ist dabei, dass als zusätzliche Informationen jedenfalls auch Landnutzungsinformationen hergeleitet werden, falls, wie vorliegend, die charakteristischen Informationen keine Landnutzungsinformationen umfassen.

Umfassen die charakteristischen Informationen allerdings bereits eine Landnutzungsinformationen im erforderlichen Umfang, um die 3D-Simulationsumgebung erstellen zu können, können diese freilich direkt genutzt werden. Wenn die Landnutzungsinformationen aber keine Informationen dazu umfassen, ob ein Bereich der Region einem Wohngebiet, einem Industriegebiet, einem Agrargebiet oder einem Naturgebiet entspricht, können diese Informationen, wie ebenfalls schon weiter oben beschrieben, als Metadaten abgeleitet werden, z.B. unter Berücksichtigung der Bevölkerungsdichte. Vorliegend ist es also so, dass die charakteristischen Informationen Informationen zur Bevölkerungsdichte umfassen und im Schritt des Herleitens von zusätzlichen Informationen von den Informationen zur Bevölkerungsdichte auf wenigstens einen Teil der Landnutzungsinformationen geschlossen wird.

In Schritt S6 erfolgt dann ein Ermitteln der dreidimensionalen virtuellen Objekte aus der Grundbibliothek, die in der geografischen Region vorkommen, auf der Grundlage der charakteristischen Informationen und der zusätzlichen Informationen, und ein Ablegen dieser dreidimensionalen virtuellen Objekte in einer Regionalbibliothek. Mit anderen Worten werden hiermit die dreidimensionalen virtuellen Objekte aus der ursprünglichen Bibliothek herausgesucht, die grundsätzlich zu der eingegebenen geografischen Region, für die die 3D-Simulationsumgebung erstellt werden soll, passen.

Mit Hilfe der Landnutzungsinformationen erfolgt in Schritt S7 ein Unterteilen der geografischen Region in Sektoren gleicher Landnutzung, und in Schritt S8 erfolgt für jeden Sektor ein Ermitteln der dreidimensionalen virtuellen Objekte aus der Regionalbibliothek, die zu der Landnutzung dieses Sektors passen. In Schritt S8 wird hinsichtlich der Objekte, zu denen jeweils verschiedene Versionen für verschiedene Jahreszeiten hinterlegt sind, jeweils eine solche Version für den jeweiligen Sektor ausgewählt, die der erfassten Jahreszeit entspricht. Auf diese Weise werden für das jeweilige Areal, nämlich einen jeweiligen Sektor gleicher Landnutzung, nicht nur die für die entsprechende geografische Region korrekten dreidimensionalen virtuellen Objekte herausgesucht, sondern es werden daraus auch die Objekte bestimmt, die in dem jeweiligen Areal aller Wahrscheinlichkeit zu der vorbestimmten Jahreszeit auch vorkommen.

In Schritt S9 wird dann jeder Sektor mit einer Auswahl an dreidimensionalen virtuellen Objekten, die für den jeweiligen Sektor aufgrund dessen Landnutzung ermittelt worden sind, aufgefüllt. Damit ist die Erstellung des Verfahrens zum Erstellen einer dreidimensionalen Simulationsumgebung abgeschlossen. Diese dreidimensionale Simulationsumgebung kann nachfolgend zum Erzeugen von Testdaten zum Testen eines einen Sensordatenstrom auswertenden Steuersystems verwendet werden.

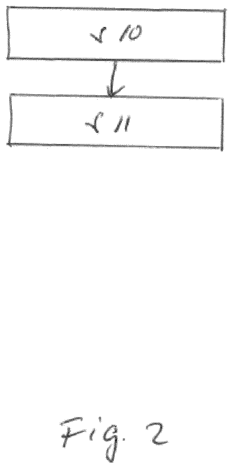

Dazu kann ein schematisch in Fig. 2 dargestelltes computerimplementiertes Verfahren verwendet werden, das die folgenden Verfahrensschritte aufweist: ein simuliertes Durchfahren wenigstens eines Teils dreidimensionalen Simulationsumgebung mit einem einen virtuellen Sensor tragenden virtuellen Fahrzeug in Schritt S10 und ein Erzeugen synthetischer Sensordaten mit dem Sensor, die solchen Daten entsprechen, die ein realer Sensor beim Durchfahren einer realen Umgebung, die der abgespeicherten dreidimensionalen Simulationsumgebung entspricht, erzeugt hätte, in Schritt S11. Die damit erhaltenen synthetischen Sensordaten können dann zum Testen eines einen Sensordatenstrom auswertenden Steuersystems verwendet werden.

An dieser Stelle sei angemerkt, dass es zur Berücksichtigung einer jeweiligen Jahreszeit nicht zwingend erforderlich ist, dass zumindest ein Teil der Objekte in unterschiedlichen Versionen hinsichtlich ihres Aussehens zu unterschiedlichen Jahreszeiten hinterlegt sind. Alternativ dazu ist es möglich, dass dreidimensionale virtuelle Objekte der Grundbibliothek hinsichtlich ihres Aussehens zu verschiedenen Jahreszeiten parametrierbar sind, so dass sie auf diese Weise an die jeweilige Jahreszeit angepasst werden können.

Weiterhin wird vorliegend so vorgegangen, dass in dem Fall, dass die charakteristischen Informationen eine Karte umfassen, die Straßen und Gebäudeumrisse angibt, im Schritt des Herleitens von zusätzlichen Informationen mittels einer auf die in der Karte enthaltenen Straßen und Gebäudeumrisse angewandten Mustererkennung auf wenigstens einen Teil der Landnutzungsinformationen geschlossen wird. Dies verbessert die Verlässlichkeit der Ermittlung der Landnutzungsinformationen, was zu einer noch realitätsgetreueren Darstellung der 3D-Simulationsumgebung führt. Gilt ferner, dass die charakteristischen Informationen ein Erstellungsdatum einer Einheit umfassen, die sich in der Region befindet, wird vorliegend im Schritt des Herleitens von zusätzlichen Informationen aus dem Erstellungsdatum auf wenigstens einen Teil der Landnutzungsinformationen geschlossen wird. Ein konkretes Beispiel ist hier das Datum, zu dem eine Anpflanzung von Bäumen erfolgt ist. Über das Alter der Anpflanzung kann auf die Größe der als dreidimensionale virtuelle Objekte darzustellenden Bäume geschlossen werden.

## Patentansprüche

1. Computerimplementiertes Verfahren zum Erstellen einer dreidimensionalen Simulationsumgebung, mit folgenden Verfahrensschritten:
Bereitstellen einer Grundbibliothek mit dreidimensionalen virtuellen Objekten,
Erfassen der Eingabe einer geografischen Region, für die die dreidimensionale Simulationsumgebung erstellt werden soll,
Einholen von charakteristischen Informationen, die Merkmale verschiedener Bereiche der geografischen Region oder der gesamten geografischen Region charakterisieren,
Herleiten von zusätzlichen Informationen für die verschiedenen Bereiche der geografischen Region oder für die gesamte geografische Region auf der Grundlage der charakteristischen Informationen, wobei als zusätzliche Informationen jedenfalls auch Landnutzungsinformationen hergeleitet werden, falls die charakteristischen Informationen keine Landnutzungsinformationen umfassen,
Ermitteln der dreidimensionalen virtuellen Objekte aus der Grundbibliothek, die in der geografischen Region vorkommen, auf der Grundlage der charakteristischen Informationen und/oder der zusätzlichen Informationen, und Ablegen dieser dreidimensionalen virtuellen Objekte in einer Regionalbibliothek,
Unterteilen der geografischen Region in Sektoren gleicher Landnutzung auf der Grundlage der Landnutzungsinformationen,
für jeden Sektor Ermitteln der dreidimensionalen virtuellen Objekte aus der Regionalbibliothek, die zu der Landnutzung dieses Sektors passen, und
Auffüllen jedes Sektors mit einer Auswahl an dreidimensionalen virtuellen Objekten, die für den jeweiligen Sektor aufgrund dessen Landnutzung ermittelt worden sind.

2. Computerimplementiertes Verfahren nach Anspruch 1, wobei die charakteristischen Informationen wenigstens Landnutzungsinformationen und/oder Klimainformationen und/oder Informationen zur Anzahl der Bevölkerung umfassen.

3. Computerimplementiertes Verfahren nach Anspruch 1 oder 2, wobei die Landnutzungsinformationen Informationen dazu umfassen, ob ein Bereich der Region einem Wohngebiet, einem Industriegebiet, einem Agrargebiet oder einem Naturgebiet entspricht.

4. Computerimplementiertes Verfahren nach einem der Ansprüche 1 bis 3, wobei wenigstens ein Teil der dreidimensionalen virtuellen Objekte der Grundbibliothek hinsichtlich ihres Aussehens zu verschiedenen Jahreszeiten parametrierbar sind, wobei das Verfahren folgende zusätzliche Verfahrensschritte aufweist:
Erfassen der Eingabe einer Jahreszeit, für die die dreidimensionale Simulationsumgebung erstellt werden soll, und
Parametrieren der dreidimensionalen virtuellen Objekte, mit denen ein jeder Sektor aufgefüllt worden ist, hinsichtlich ihres Aussehens in Abhängigkeit von der eingegebenen Jahreszeit.

5. Computerimplementiertes Verfahren nach einem der Ansprüche 1 bis 3, wobei wenigstens ein Teil der dreidimensionalen virtuellen Objekte der Grundbibliothek in verschiedenen Versionen hinterlegt sind, wobei sich diese verschiedenen Versionen hinsichtlich ihres Aussehens zu verschiedenen Jahreszeiten unterscheiden, wobei das Verfahren den folgende zusätzliche Verfahrensschritt aufweist:
Erfassen der Eingabe einer Jahreszeit, für die die dreidimensionale Simulationsumgebung erstellt werden soll, und in dem Schritt des Ermittelns der dreidimensionalen virtuellen Objekte für jeden Sektor aus der Regionalbibliothek, die der Landnutzung dieses Sektors zugeordnet sind, hinsichtlich der Objekte, zu denen jeweils verschiedene Versionen hinterlegt sind, jeweils eine solche Version für den jeweiligen Sektor ausgewählt wird, die der erfassten Jahreszeit entspricht.

6. Computerimplementiertes Verfahren nach einem der Ansprüche 1 bis 5, wobei die charakteristischen Informationen Informationen zur Bevölkerungsdichte umfassen oder die Informationen zur Bevölkerungsdichte aus den charakteristischen Informationen herleitbar sind und im Schritt des Herleitens von zusätzlichen Informationen von den Informationen zur Bevölkerungsdichte auf wenigstens einen Teil der Landnutzungsinformationen geschlossen wird.

7. Computerimplementiertes Verfahren nach einem der Ansprüche 1 bis 6, wobei die charakteristischen Informationen eine Karte umfassen, die Straßen und Gebäudeumrisse angibt, und im Schritt des Herleitens von zusätzlichen Informationen mittels einer auf die in der Karte enthaltenen Straßen und Gebäudeumrisse angewandten Mustererkennung auf wenigstens einen Teil der Landnutzungsinformationen geschlossen wird.

8. Computerimplementiertes Verfahren nach einem der Ansprüche 1 bis 7, wobei die charakteristischen Informationen ein Erstellungsdatum einer Einheit umfassen, die sich in der Region befindet und im Schritt des Herleitens von zusätzlichen Informationen aus dem Erstellungsdatum auf wenigstens einen Teil der Landnutzungsinformationen geschlossen wird.

9. Nichtflüchtiges, computerlesbares Speichermedium mit einer darauf abgespeicherten dreidimensionalen Simulationsumgebung, die mit einem Verfahren nach einem der vorhergehenden Ansprüche erhalten worden ist.

10. Computerimplementiertes Verfahren zum Erzeugen von Testdaten zum Testen eines einen Sensordatenstrom auswertenden Steuersystems, mit folgenden Verfahrensschritten:
Durchfahren wenigstens eines Teils der auf dem nichtflüchtigen, computerlesbaren Speichermedium gemäß Anspruch 9 abgespeicherten dreidimensionalen Simulationsumgebung mit einem einen virtuellen Sensor tragenden virtuellen Fahrzeug und
Erzeugen synthetischer Sensordaten mit dem Sensor, die solchen Daten entsprechen, die ein realer Sensor beim Durchfahren einer realen Umgebung, die der abgespeicherten dreidimensionalen Simulationsumgebung entspricht, erzeugt hätte.

11. Nichtflüchtiges, computerlesbares Speichermedium mit darauf abgespeicherten synthetischen Sensordaten, die mit dem Verfahren gemäß Anspruch 10 erhalten worden sind.

12. Verwendung der auf dem nichtflüchtigen, computerlesbaren Speichermedium nach Anspruch 11 abgespeicherten synthetischer Sensordaten zum Testen eines einen Sensordatenstrom auswertenden Steuersystems.

13. Verwendung nach Anspruch 12, wobei das einen Sensordatenstrom auswertende Steuersystem ein Fahrerassistenzsystem für eine Kraftfahrzeug ist.
